(19) Europäisches Patentamt / European Patent Office / Office européen des brevets

(11) **EP 4 468 693 A1**

(12) **EUROPEAN PATENT APPLICATION**

(43) Date of publication:
**27.11.2024 Bulletin 2024/48**

(51) International Patent Classification (IPC):
***H04N 1/60*** *(2006.01)*

(21) Application number: **24175618.8**

(52) Cooperative Patent Classification (CPC):
**H04N 1/6036;** H04N 1/6097

(22) Date of filing: **14.05.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.05.2023 JP 2023085519**
**30.01.2024 JP 2024012095**

(71) Applicant: **Ricoh Company, Ltd.**
**Tokyo 143-8555 (JP)**

(72) Inventor: **MATSUSHIMA, Yuki**
**Tokyo 143-8555 (JP)**

(74) Representative: **Marks & Clerk LLP**
**15 Fetter Lane**
**London EC4A 1BW (GB)**

(54) **PROCESSING APPARATUS, COLOR MANAGEMENT METHOD, CARRIER MEDIUM, AND IMAGE FORMING SYSTEM**

(57) A processing apparatus (14) includes a first gray adjustment unit (56) to set a value on a device-independent color space as a first color reproduction target value of mixed color, a second color reproduction target value obtaining unit (52) to obtain, as a calibration target, a second color reproduction target value of mixed color in a printing environment where the first color reproduction target value is set, and a second gray adjustment unit (58) to adjust a correction parameter to be applied in the printing environment in a case that a calibration is updated, so as to correct a color difference between the first color reproduction target value and the second color reproduction target value using the correction parameter.

FIG. 6

EP 4 468 693 A1

**Description**

BACKGROUND

Technical Field

Embodiments of the present disclosure relate to a processing apparatus, a color management method, a carrier medium, and an image forming system.

Related Art

G7, which is one of the color management standards proposed by the International Digital Enterprise Alliance (Idealliance), is a set of specifications for increasing overall color reproducibility by managing gray (color) based on an idea that when the gray balance is correct, the quality and the reproducibility of color tone are significantly increased. Gray adjustment is performed using a tone reproduction curve (TRC) of cyan, magenta, and yellow (CMY) colors. Since the G7 proposed by Idealliance has consistent target values and operations, a difference in perception of quality is less likely to occur between a customer and a printing company.

For example, Japanese Patent No. 5754462 discloses a print setting apparatus that performs print settings for print data to be output by an image forming apparatus capable of executing a plurality of gray calibration methods, and a program for the print setting apparatus.

G7 gray calibration is one of the calibration methods using gray balance. For example, in the G7 gray calibration as an industry standard, since mixed-color management using a mixed color as a target color is adopted, the adjustment method is complex and involves complicated operations. Accordingly, the convenience of the G7 gray calibration is low. On the other hand, if monochromatic management still using a mixed color as a target is adopted in a calibration method, the quality of the calibration method is degraded.

SUMMARY

In one aspect, a processing apparatus includes a first gray adjustment unit to set a value on a device-independent color space as a first color reproduction target value of mixed color, a second color reproduction target value obtaining unit to obtain, as a calibration target, a second color reproduction target value of mixed color in a printing environment where the first color reproduction target value is set, and a second gray adjustment unit to adjust a correction parameter to be applied in the printing environment in a case that a calibration is updated, so as to correct a color difference between the first color reproduction target value and the second color reproduction target value using the correction parameter.

In another aspect, a color management method performed by a processing apparatus includes setting a value on a device-independent color space as a first color reproduction target value of mixed color, obtaining, as a calibration target, a second color reproduction target value of mixed color in a printing environment where the first color reproduction target value is set, and adjusting a correction parameter to be applied in the printing environment in a case that a calibration is updated, so as to correct a color difference between the first color reproduction target value and the second color reproduction target value using the correction parameter.

In another aspect, a carrier medium carrying computer-readable code for controlling a computer system of a processing apparatus to carry out a method including setting a value on a device-independent color space as a first color reproduction target value of mixed color, obtaining, as a calibration target, a second color reproduction target value of mixed color in a printing environment where the first color reproduction target value is set, and adjusting a correction parameter to be applied in the printing environment in a case that a calibration is updated, so as to correct a color difference between the first color reproduction target value and the second color reproduction target value using the correction parameter.

In another aspect, an image forming system includes the processing apparatus described above, and an image forming apparatus to receive the correction parameter and execute printing based on a print job to which the correction parameter is applied.

One object of embodiments of the present disclosure is to achieve both high quality and convenience of calibration.

BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

FIG. 1 is a block diagram illustrating a configuration of an image forming system according to embodiments of the present disclosure;

FIG. 2 is a block diagram illustrating a hardware configuration of an image forming apparatus according to the embodiments of the present disclosure;

FIG. 3 is a block diagram illustrating a hardware configuration of a computer according to the embodiments of the present disclosure;

FIG. 4 is a block diagram illustrating a functional configuration of a controller according to the embodiments of the present disclosure;

FIG. 5 is a block diagram illustrating a functional configuration of an image forming apparatus according to the embodiments of the present disclosure;

FIG. 6 is a block diagram illustrating a functional configuration of a processing apparatus according to the embodiments of the present disclosure;

FIG. 7 is a diagram illustrating a P2P chart according to the embodiments of the present disclosure;

FIG. 8 is a diagram illustrating a GrayFinder chart according to the embodiments of the present disclosure;

FIG. 9 is a diagram illustrating a gray chart used for gray second adjustment according to the embodiments of the present disclosure;

FIG. 10 is a diagram illustrating another gray chart used for the gray second adjustment according to the embodiments of the present disclosure;

FIG. 11 is a flowchart of the processing executed by an image forming system according to the embodiments of the present disclosure;

FIG. 12 is a flowchart of details of the processing executed by an image forming system at the time a calibration is newly created, according to the embodiments of the present disclosure;

FIG. 13 is a flowchart of details of the processing executed by the image forming system at the time a calibration is updated, according to the embodiments of the present disclosure;

FIG. 14 is a diagram illustrating a user interface (UI) according to the embodiments of the present disclosure;

FIGS. 15A to 15D are diagrams each illustrating the UI according to the embodiments of the present disclosure;

FIGS. 16A to 16D are diagrams each illustrating the UI according to the embodiments of the present disclosure;

FIGS. 17A to 17F are diagrams each illustrating the UI according to the embodiments of the present disclosure;

FIG. 18 is a diagram illustrating a tone reproduction curve (TRC) according to the embodiments of the present disclosure;

FIG. 19 is a diagram illustrating a look up table (LUT) created from a first chart, according to a background art; and

FIG. 20 is a diagram illustrating an example of adjustment using the LUT created in FIG. 19 and a second chart, according to the background art.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments of the present disclosure are described below with reference to the accompanying drawings. Embodiments of the present disclosure relate to a processing apparatus, a color management method, a carrier medium, and an image forming system for performing color management by executing calibration using a mixed-color gray.

Overview

In the market of color management, a large number of data sets that include device values and colorimetric values are distributed as the standard colors in the industry. Examples of the standard colors in the industry include Japan Color 2011, FOGRA39, and General Requirements for Applications in Commercial Offset Lithography (GRACOL), which are compliant with an international standard of the International Organization for Standardization (ISO). Also, in the market, profiles created based on the standard colors in the industry are distributed.

In recent years, the importance of gray color reproducibility has increased in the market, and gray calibration methods suitable for each of the standard colors in the industry have been proposed. A proposal of the G7 gray calibration by Idealliance as a gray calibration method suitable for GRACOL is one example. In addition, many other gray calibration methods developed independently by printer manufacturers exist.

These gray calibration methods employ correction methods determined based on a concept unique to each organization or manufacturer. Accordingly, different gray calibration methods employ different correction methods.

As described above, a large number of gray calibration methods exist in accordance with the standard colors in the industry. Since operators and printing machines need to handle each gray calibration method, the burden of implementing each gray calibration method is significant.

In addition, in the G7 calibration, an absolute value of gray, which is a value on a device-independent color space, is set as a target. This is to avoid misunderstanding between a printing company and a customer, and to guarantee the same color reproducibility even when printing is executed at a remote location. However, the G7 calibration is complicated in the adjustment procedure and imposes a heavy burden on the operators.

The G7 calibration is a technique for generating a correction curve for correcting each of cyan, magenta, yellow, and black (CMYK) single colors. In the G7 calibration, the following processes (1) to (3) are performed.

(1) A correction curve for correcting the gradation of each of the CMYK single colors is generated based on the density value. Thereafter, the signal value of cyan (the amount of toner to be used) is fixed for gray made from CMY toners (referred to as CMY mixed-color gray or simply as mixed-color gray in the following description).

(2) A gray determination chart formed of multiple patches having continuous signal values is measured while the signal value of magenta and the signal value of yellow are shifted to positive values and negative values.

(3) Through the above-described processes, adjustment values that are the density values of magenta and yellow set in a patch having color closest to gray in the chromaticity value among the multiple patches forming the gray determination chart are determined.

In the G7 calibration, the gray determination chart is printed in multiple density ranges from a low-density range to a high-density range, where the total of the signal values of CMY colors is 300%. The colors of the printed charts are measured and the adjustment values of magenta and yellow for correcting the colors to gray are determined, thereby generating a correction curve for each of CMYK colors. The G7 calibration requires an overly complicated procedure in which gray more neutral in visibility can be reproduced by reflecting the generated correction curves on the density values of CMYK colors output by an image forming apparatus.

For this reason, some printer manufacturers adopt an operation in which the monochromatic characteristics (gradation versus density curve) at the time a gray target is set are stored as a real target, and adjustment for reproducing the real target is performed at the time a calibration is updated. However, such a monochromatic-based management operation cannot accommodate the change of the mixed-color characteristics. On the other hand, it is a heavy burden on the operators to execute the G7 calibration processes from the beginning at the time the calibration is updated.

In view of the above, according to the present embodiments, in the technique for reproducing the standard colors in the industry at the time a calibration is updated, a process to reproduce the gray target of the G7, which is one of the standard colors in the industry, a process to accommodate the change of the mixed-color characteristics, and operations performed by the operators at the time the calibration is updated are unified regardless of the standards in the industry, and thus reduction of the work load is achieved.

In the present embodiment, a printing environment is obtained in which gray color standard in the industry is reproduced at the time a calibration is newly created. In the present embodiment, a calibration target is obtained in the printing environment. The calibration target is a mixed-color gray. In the present embodiment, a gray patch is measured also at the time the calibration is updated and adjustment is performed so that the color of the gray patch coincides with the color of the mixed-color gray. In other words, in the present embodiment, the mixed-color management is also performed at the time the calibration is updated. At the time the calibration is updated, the mixed-color management is performed by applying the calibration target (mixed-color gray) obtained at the time the calibration is newly created to a tone reproduction curve (TRC). In the present embodiment, a chart of the calibration target is printed in the printing environment in which the gray color standard in the industry is reproduced at the time the calibration is newly created and the printed chart is used at the time the calibration is updated. Thus, the calibration is updated using a method that imposes a less burden on the operators other than the G7 calibration that imposes a heavy burden on the operators.

In the present embodiment, a relative color difference (color shift) from the calibration target is corrected at the time the calibration is updated. In this way, operations performed at the time a calibration is updated are unified in the present embodiment. In the present embodiment, a gray chart is printed and the printed chart is measured at the time a calibration is newly created, and a calibration target is set based on the colorimetric data of the printed chart. In addition, in the present embodiment, mixed-color adjustment is performed to reproduce the calibration target at the time the calibration is updated.

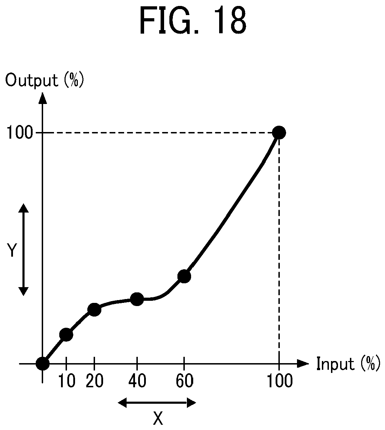

As described above, the present embodiments follow the policy of the G7 calibration that the result of the mixed-color adjustment is applied to a monochromatic TRC to manage gray and, as a result, the overall color reproducibility is increased. When a continuous tone of a document is converted into a halftone tone, each monochromatic color has a monochromatic color characteristic curve with the ratio of the dot area on the X-axis and the density of the document on the Y-axis. The TRC is a curve that assigns the ratio of input dot area to the ratio of output dot area ratio that is different from the ratio of input dot area in order to correct the above-described monochromatic color characteristic curve. In FIG. 18, a graph representing the TRC is illustrated as an example.

First Embodiment

In the present embodiment, at the time a calibration is newly created, the G7 calibration is executed using a colorimeter. In a situation (printing environment) immediately after the execution of the G7 calibration, a calibration target used at the time the calibration is updated is obtained. At the time the calibration is updated, a color difference (color shift) from the calibration target obtained in the printing environment immediately after the execution of the G7 calibration is corrected. In the present embodiment, a case is described in which a user such as an operator gives various instructions.

Configuration of Image Forming System

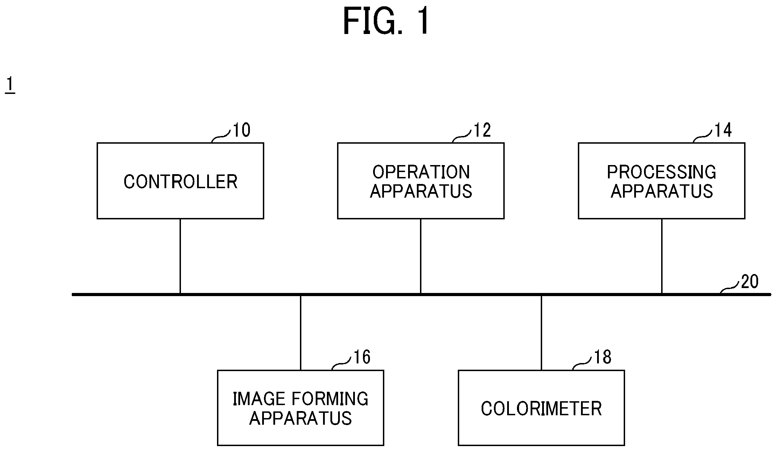

FIG. 1 is a block diagram illustrating a configuration of an image forming system 1 according to the embodiments of the present disclosure. The image forming system 1 according to the present embodiments includes a controller 10, an operation apparatus 12, a processing apparatus 14, an image forming apparatus 16, and a colorimeter 18. The controller 10, the operation apparatus 12, the processing apparatus 14, the image forming apparatus 16, and the colorimeter 18 of the image forming system 1 are connected to each other via a network 20. At least one or more of the controller 10, the operation apparatus 12, the processing apparatus 14, the image forming apparatus 16, and the colorimeter 18 may be connected to each other via a control bus.

The operation apparatus 12 displays a user interface and receives an operation from an operator through the user interface. The operation apparatus 12 includes an input device such as a keyboard or a mouse, and a display device such as a display. For example, the operator, through the operation apparatus 12, selects whether to newly create a calibration or update a calibration, or operates the colorimeter 18. The operation apparatus 12 may further include circuitry such as a CPU that controls the input device and the display device. Further, the input device and the display device may be combined into one device, such as a touch panel.

The colorimeter 18 measures the color of multiple patches forming charts used for gray adjustment performed by a first gray adjustment unit and a second gray adjustment unit, both of which will be described later, or a chart used for obtaining a calibration target, and transmits the colorimetric data to the processing apparatus 14.

The controller 10 acquires a calibration identification (ID) for identifying the calibration based on information indicating that the operator has selected through the operation apparatus 12 whether to newly create a calibration or update a calibration. The controller 10 also receives an instruction to perform gray adjustment from the operation apparatus 12. Further, the controller 10 acquires a print job used for printing, transmits the print job to the image forming apparatus 16, and issues a print instruction. Furthermore, the controller 10 transmits the calibration ID to the processing apparatus 14.

The image forming apparatus 16 receives a TRC correction parameter from the processing apparatus 14 and applies the TRC correction parameter to the TRC. The image forming apparatus 16 also receives the print instruction from the controller 10 and executes printing based on the print job.

The processing apparatus 14 receives, as data used for the gray adjustment, the colorimetric data from the colorimeter 18 that has measured the color of the multiple patches. In addition, the processing apparatus 14 receives the calibration ID from the controller 10 and performs the gray adjustment based on the information described in the calibration ID. Finally, the processing apparatus 14 calculates a TRC correction parameter that is a result of the gray adjustment and transmits the TRC correction parameter to the image forming apparatus 16.

Hardware Configurations

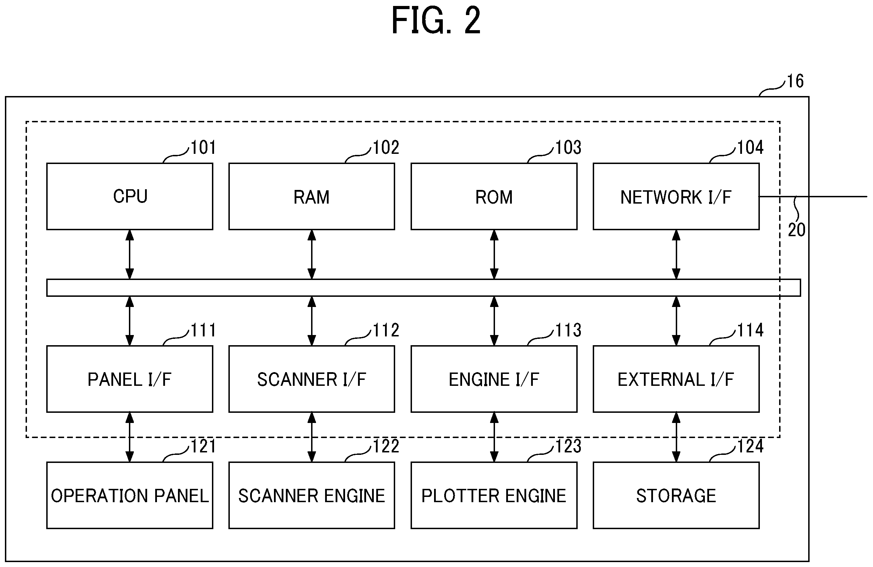

FIG. 2 is a block diagram illustrating a hardware configuration of the image forming apparatus 16 according to the embodiments of the present disclosure. The image forming apparatus 16 illustrated in FIG. 2 includes a central processing unit (CPU) 101, a random-access memory (RAM) 102, a read-only memory (ROM) 103, a network interface (I/F) 104, a panel I/F 111, a scanner I/F 112, an engine I/F 113, an external I/F 114, an operation panel 121, a scanner engine 122, a plotter engine 123, and a storage 124, which are connected to each other.

The CPU 101 controls the entire operation of the image forming apparatus 16. The ROM 103 stores programs or various data executed when the image forming apparatus 16 is activated. The RAM 102 temporarily stores various programs read from the ROM 103 or data such as print data. For the distribution, the programs stored in the RAM 102 may be stored in any computer-readable recording medium, such as a compact disc-read only memory (CD-ROM), compact disc-recordable (CD-R), or digital versatile disc (DVD), in a file format installable or executable by a computer.

The panel I/F 111 is an interface for the operation panel 121. The operation panel 121 has a display function to display a message to the operator and an input function to receive an operation from the operator.

The scanner I/F 112 is an interface for the scanner engine 122. The scanner engine 122 reads data (image data) from a document. The image data read from the document by the scanner engine 122 is written to the RAM 102 via the scanner I/F 112.

The engine I/F 113 is an interface for the plotter engine 123. The plotter engine 123 receives data to be printed (print data) via the engine I/F 113. The plotter engine 123 prints the print data received via the engine I/F 113 on a sheet.

The external I/F 114 is an interface for the storage 124. The network I/F 104 is an interface for communication through the network 20. At least some of the components illustrated in FIG. 2 may be used as the components of the controller 10, the operation apparatus 12, or the processing apparatus 14 illustrated in FIG. 1.

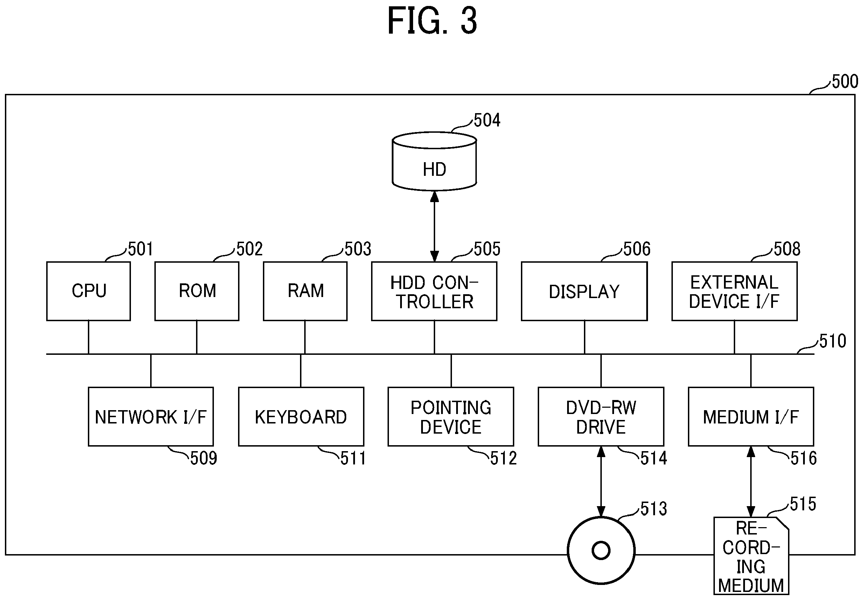

The processing apparatus 14 is implemented by, for example, a computer 500 illustrated in FIG. 3. Similarly, the controller 10 is implemented by, for example, the computer 500. FIG. 3 is a block diagram illustrating a hardware configuration of the computer 500 according to the embodiments of the present disclosure.

The computer 500 includes a CPU 501, a ROM 502, a RAM 503, a hard disk (HD) 504, a hard disk drive (HDD) controller 505, a display 506, an external device I/F 508, a network I/F 509, a keyboard 511, a pointing device 512, a digital versatile disc-rewritable (DVD-RW) drive 514, and a medium I/F 516.

The CPU 501 controls the entire operation of the computer 500. The ROM 502 stores a program such as an initial program loader (IPL) to boot the CPU 501. The RAM 503 is used as a work area for the CPU 501. The HD 504 stores various data such as a program. The HDD controller 505 controls the reading and writing of various data from and to the HD 504 under the control of the CPU 501.

The display 506 is an example of a display device that displays various information such as a cursor, a menu, a window, characters, and images. The external device I/F 508 is an interface for connection with various external devices. Examples of the external devices include, but not limited to, a universal serial bus (USB) memory.

The network I/F 509 is an interface for data communication through the network 20. The computer 500 further includes a bus line 510. The bus line 510 is, for example, an address bus or a data bus, which electrically connects the components or elements such as the CPU 501 illustrated in FIG. 3 to each other.

The keyboard 511 is an example of an input device that includes multiple keys used for, for example, inputting characters, numerical values, and various instructions. The pointing device 512 is an example of an input device used for, for example, selecting or executing various instructions, selecting an object to be processed, and moving a cursor being displayed.

The DVD-RW drive 514 controls the reading and writing of various data from and to a DVD-RW 513, which is an example of a removable recording medium. The DVD-RW may be an optical storage medium such as a digital versatile disc-recordable (DVD-R). The medium I/F 516 controls the reading and writing of data from and to a recording medium 515 such as a flash memory.

Functional Configurations

Functional Configuration of Controller

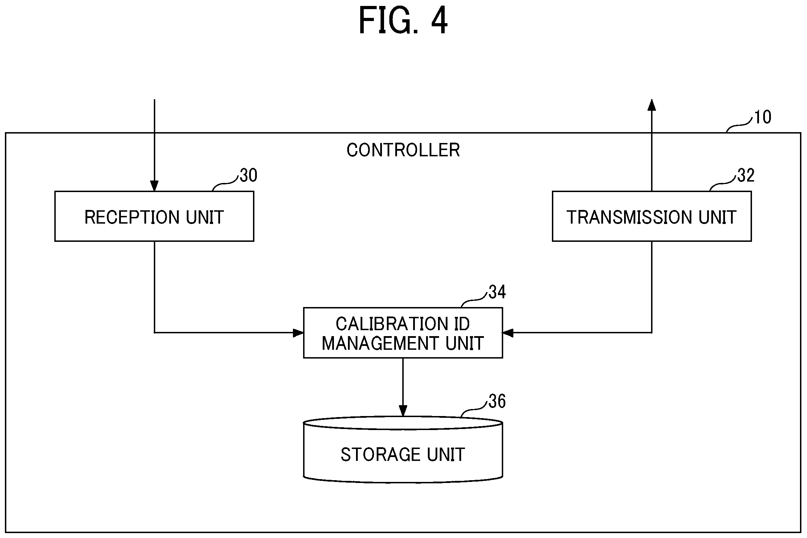

FIG. 4 is a block diagram illustrating a functional configuration of the controller 10 according to the embodiments of the present disclosure. The controller 10 includes a reception unit 30, a transmission unit 32, a calibration ID management unit 34, and a storage unit 36.

The reception unit 30 receives information indicating the type of calibration, such as the name of the calibration, transmitted from the operation apparatus 12. The transmission unit 32 transmits the print job to the image forming apparatus 16, and transmits the calibration ID to the processing apparatus 14 or the image forming apparatus 16. The calibration ID management unit 34, based on the information received by the reception unit 30, newly creates a calibration ID or manages the calibration ID in association with the print job. The calibration ID management unit 34 is implemented by, for example, the CPU 501. The storage unit 36 stores an image of a P2P chart used for the G7 calibration, an image of a GrayFinder chart, an image for obtaining a second color reproduction target value, and a gray chart used for gray second adjustment. The storage unit 36 is implemented by any desired memory, such as the RAM 503.

The calibration ID management unit 34 manages information on the calibration using calibration information described in a calibration ID file. The calibration information includes, for example, a print sheet, a basis weight, a halftone, a type of calibration (monochromatic gray or mixed-color gray), the file name of a calibration target, a print job subjected to color measurement, and a final execution time.

Functional Configuration of Image Forming Apparatus

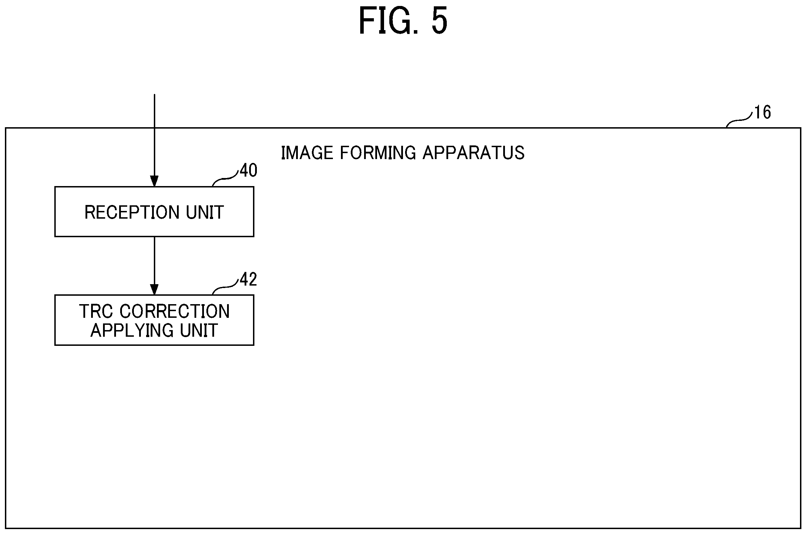

FIG. 5 is a block diagram illustrating a functional configuration of the image forming apparatus 16 according to the embodiments of the present disclosure. The image forming apparatus 16 includes a reception unit 40 and a TRC correction applying unit 42.

The reception unit 40, which is implemented by the network I/F 104, receives the calibration ID and the print job from the controller 10 via a network. The reception unit 40 receives the calibration ID and the TRC correction parameter from the processing apparatus 14. The TRC correction applying unit 42, which is implemented by the CPU 101, applies the TRC correction parameter to the print job corresponding to the calibration ID. The image forming apparatus 16 executes printing based on the print job to which the TRC correction parameter is applied, using the plotter engine 123.

Functional Configuration of Processing Apparatus

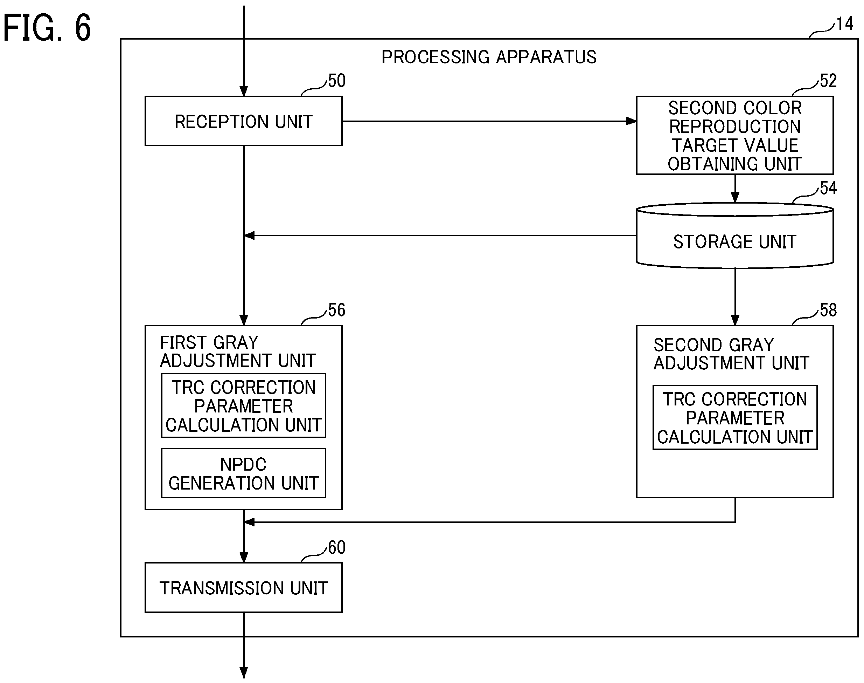

FIG. 6 is a block diagram illustrating a functional configuration of the processing apparatus 14 according to the embodiments of the present disclosure. The processing apparatus 14 includes a reception unit 50, a second color reproduction target value obtaining unit 52, a storage unit 54, a first gray adjustment unit 56, a second gray adjustment unit 58, and a transmission unit 60. The reception unit 50 and the transmission unit 60 may be implemented by the network I/F 509, for example. The second color reproduction target value obtaining unit 52, the first gray adjustment unit 56, and the second gray adjustment unit 58 are implemented by the CPU 501. The storage unit 54 is implemented by any desired memory such as the RAM 503.

The reception unit 50 receives the calibration ID from the controller 10 via the network. The reception unit 50 also receives the colorimetric data from the colorimeter 18. The second color reproduction target value obtaining unit 52 creates a calibration target of gray based on the colorimetric data received by the reception unit 50, and stores the calibration target of gray in the storage unit 54.

The first gray adjustment unit 56 calculates a so-called TRC correction parameter for the G7 calibration and transmits the TRC correction parameter to the transmission unit 60. The second gray adjustment unit 58 calculates a TRC correction parameter for the gray second adjustment and transmits the TRC correction parameter to the transmission unit 60. The transmission unit 60 transmits the TRC correction parameter to the image forming apparatus 16.

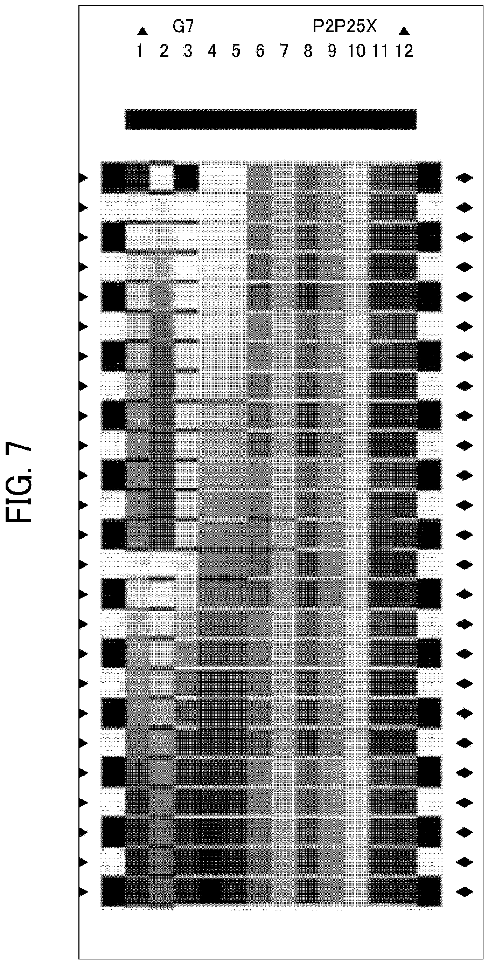

The first gray adjustment unit 56 is further described below. The reception unit 50 receives, for example, the colorimetric data of the P2P chart illustrated in FIG. 7 from the colorimeter 18. The P2P chart is the name of a chart published by the G7.

The first gray adjustment unit 56 measures the (black or visual) density of parts in monochromatic black (K) and three-color gray (3C-Gray) scale based on the colorimetric data of the P2P chart received by the reception unit 50. The three colors are cyan (C), magenta (M), and yellow (Y) in the following description. The first gray adjustment unit 56 plots the measured density on FanGraph and determines a neutral print density curve (NPDC) for the measured density. The first gray adjustment unit 56 determines output values (new_aim_C, new_aim_K) that satisfy the NPDC for the tree colors and black before being corrected.

The first gray adjustment unit 56 determines a 3C-Gray target value according to the formula (1).

$$\text{Formula (1):}$$

$$\text{Gray factor} = (100 - C\%) \, / \, 100;$$

$$\text{Wanted } a^* = a^*\_paper * \text{Gray factor};$$

and

$$\text{Wanted } b^* = b^*\_paper * \text{Gray factor}$$

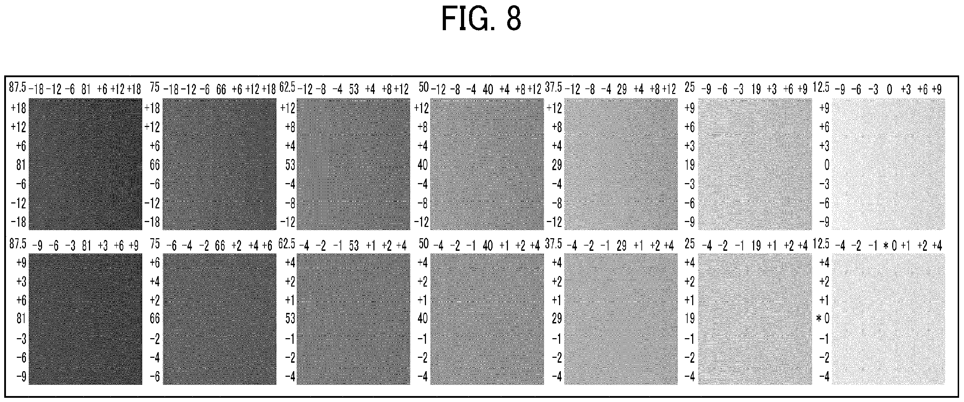

The first gray adjustment unit 56 searches for and determines a combination (new_aim_M, new_aim_Y) of M and Y colors after being corrected corresponding to M and Y colors before being corrected, based on, for example, the colorimetric values of the GrayFinder chart illustrated in FIG. 8 received by the reception unit 50 from the colorimeter 18. Finally, the first gray adjustment unit 56 calculates C, M, and Y colors after being corrected (corrected aim_C, corrected aim_M, corrected aim_Y) according to the formula (2).

Formula (2):

$$ND\_correction = (new\_aim\_C - new\_aim\_M) / 2;$$

$$corrected\ aim\_C = new\ aim\_C + ND\_correction;$$

$$corrected\ aim\_M = new\ aim\_M + ND\_correction;$$

and

$$corrected\ aim\_Y = new\ aim\_Y + ND\_correction$$

The first gray adjustment unit 56 calculates C, M, Y, and K colors after being corrected (corrected aim_C, corrected aim_M, corrected aim_Y, new_aim_K) corresponding to C, M, Y, and K colors before being corrected as a TRC correction parameter for the G7 calibration.

The second color reproduction target value obtaining unit 52 is further described below. The reception unit 50 receives the colorimetric data of the gray chart used for the gray second adjustment (a chart used for obtaining the calibration target) from the colorimeter 18. The second color reproduction target value obtaining unit 52 obtains, for example, Lab values of 20 gradations at intervals of 10%, based on the colorimetric data of the gray chart used for the gray second adjustment received by the reception unit 50. In the case where in-plane unevenness in writing exists as a characteristic of the image forming apparatus 16, multiple patches of the same gradation may be arranged.

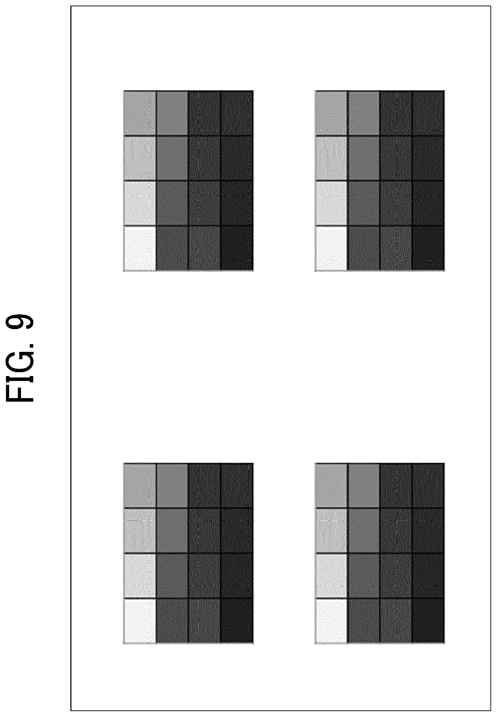

FIG. 9 is a diagram illustrating the gray chart used for the gray second adjustment according to the embodiments of the present disclosure. The gray chart used for the gray second adjustment in FIG. 9 is an example in which a total of 16 patches are arranged based on the number of repetitions "4." The 16 patches are patches made from C, M, and Y colors with each density ranging from 5% to 80% at 5% intervals. The second color reproduction target value obtaining unit 52 obtains the average value of the colorimetric values of the corresponding four patches and stores the average value in the storage unit 54 as a target Lab value.

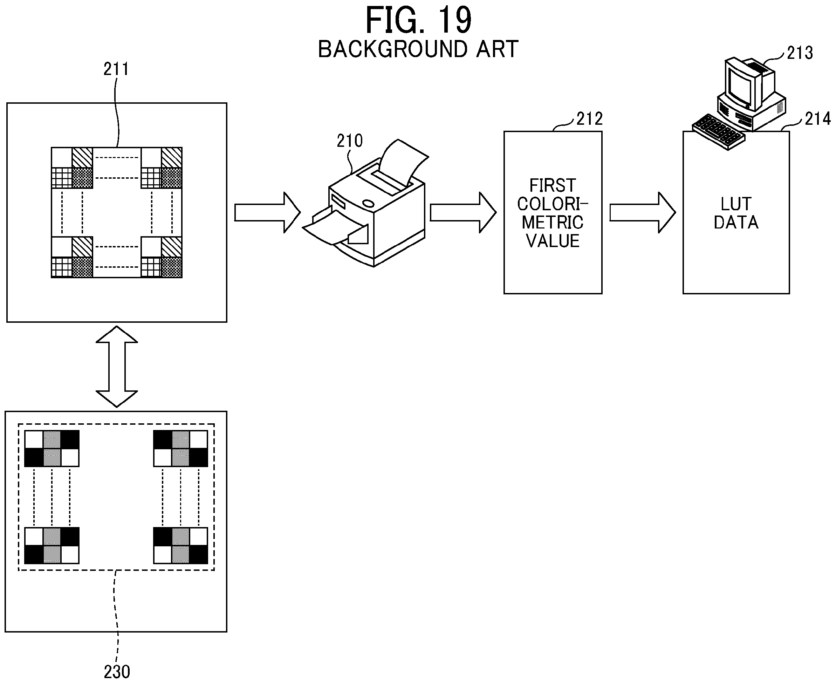

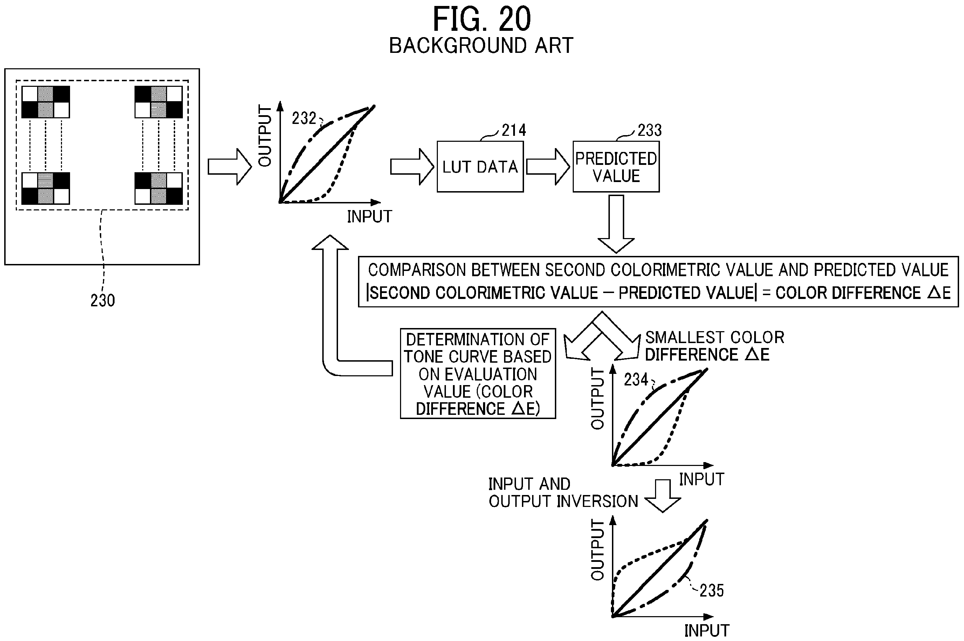

The second gray adjustment unit 58 is further described below. The second gray adjustment unit 58 may be any adjustment unit that uses a method in which mixed-color gray is used as a calibration target and mixed-color adjustment is performed relatively to the calibration target. For example, a method described in Japanese Unexamined Patent Application Publication No. 2021-150803 as the background art may be used as the method described above, which is described below referring to FIGS. 19 and 20.

FIG. 19 is a diagram illustrating a look up table (LUT) 214 created from a first chart, according to the background art. In the operation of an image forming apparatus 210, when a change occurs in the color tone of the image formation performed by the image forming apparatus 210, the adjustment is performed using a second chart 230, for example, as follows.

FIG. 20 is a diagram illustrating an example of adjustment using the LUT 214 created in FIG. 19 and the second chart 230, according to the background art. The adjustment using the second chart 230 as illustrated in FIG. 20 is performed under the condition that the LUT data 214 already exists.

The second chart 230 is a chart including fewer colors than the colors included in a first chart 211 of FIG. 19. Accordingly, the second chart 230 can be measured more easily in comparison with the first chart 211.

In the first procedure, image data representing the second chart 230 is input to the image forming apparatus 210. Then, the image forming apparatus 210 forms an image representing the second chart 230 (in the following description, sometimes referred to as a "second image") on a recording medium based on the image data.

In the second procedure, when the second image is measured using, for example, a spectrophotometer, a colorimetric value (in the following description, referred to as a "second colorimetric value") is obtained.

In the third procedure, a tone curve is provisionally set. For example, it is assumed that three points are set on the tone curve for each color of cyan, magenta, and yellow (CMY). Specifically, three points whose inputs are "20%," "50%," and "80%" are set.

The number of points is not limited to three. Further, the positions of the points may be set as desired. In the following description, such points are referred to as "control points." Next, the three points are moved independently to determine a tone curve. The determined tone curve is referred to as a "first tone curve 232."

In the following example, it is assumed that the first tone curve 232 is determined by fixing the points whose inputs are "0%" and "100%."

As illustrated in FIG. 20, by using the LUT data 214, an output value (in the following description, referred to as a "predicted value 233") corresponding to the input value of a patch included in the second chart 230 when the first tone curve 232 is applied is calculated.

In the fourth procedure, a comparison is made between the second colorimetric value and the predicted value 233. Specifically, the color difference between the second colorimetric value and the predicted value 233 is calculated for each patch included in the second chart 230. The color difference is calculated using, for example, $\Delta E1976$ or $\Delta E2000$. Alternatively, a unique calculation formula may be used.

Then, based on the average color difference of the color differences of all the patches included in the second chart 230, it is determined whether the tone curve needs to be determined again or is the best tone curve. In the following description, the tone curve determined in this manner is referred to as a "second tone curve 234." A tone curve having a smaller average color difference is determined to be better.

The color difference $\Delta E$ may be calculated by setting a weight for a color to be emphasized. For example, the color difference $\Delta E$ may be calculated by setting a higher weight for a skin color or a gray color than other colors. In other words, a preset weighting coefficient may be multiplied to calculate the color differences of these colors. For example, "$\times 5$" is set in advance as the preset weighting coefficient for a color to be emphasized, such as a skin color and a gray color. In this way, the color difference $\Delta E$ of the color to be emphasized is calculated by multiplying the difference between the second colorimetric value 231 and the predicted value 233 by five. For this reason, when the difference of the color to be emphasized is greater than the differences of the other colors, the color difference $\Delta E$ is likely to be calculated to be large. Accordingly, the tone curve is determined such that the difference of the color to be emphasized between the second colorimetric value 231 and the predicted value 233 is small.

For example, the second tone curve 234 is determined, for example, by selecting a tone curve having a color difference $\Delta E$ of the smallest value from among a plurality of determined first tone curves 232, or by selecting a tone curve having a color difference $\Delta E$ equal to or less than a predetermined reference value. Such a predetermined reference value is set in advance.

Then, the input and the output of the second tone curve 234 are inverted to generate a third tone curve 235. For example, by using the third tone curve 235 generated in this manner, the color tone of the image formation performed by the image forming apparatus 210 is adjusted.

In this way, using the third tone curve 235 generated by inverting the input and the output of the second tone curve 234, the color tone of the image formation is adjusted by measuring the color of the second chart 230 having fewer patches than the patches that the first chart has, as in the case of measuring the color of a chart having more patches than the patches that the second chart has, such as the first chart.

As described above, an operator can adjust the color by measuring the color of a chart having a small number of patches.

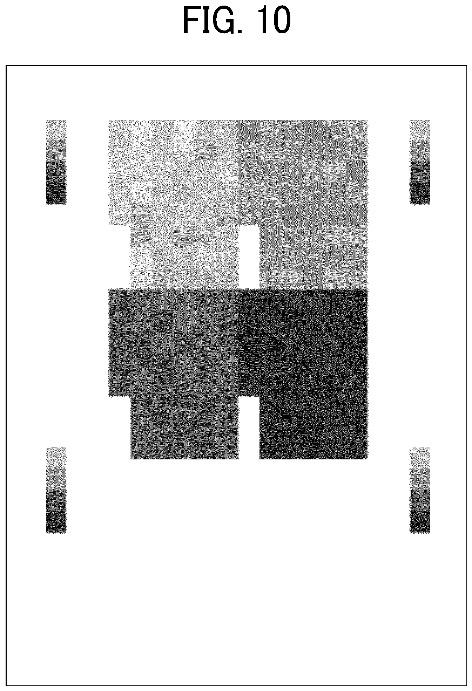

Referring back to the present embodiment, the patch structure of the gray chart used for the gray second adjustment is not necessarily the same patch structure of the chart used by the first gray adjustment unit 56. For example, the P2P chart in FIG. 7 or the GrayFinder chart in FIG. 8 used by the first gray adjustment unit 56 and the gray chart for the gray second adjustment used by the second gray adjustment unit 58 may be different from each other. FIG. 10 is a diagram illustrating another gray chart used for the gray second adjustment according to the embodiments of the present disclosure.

Processing

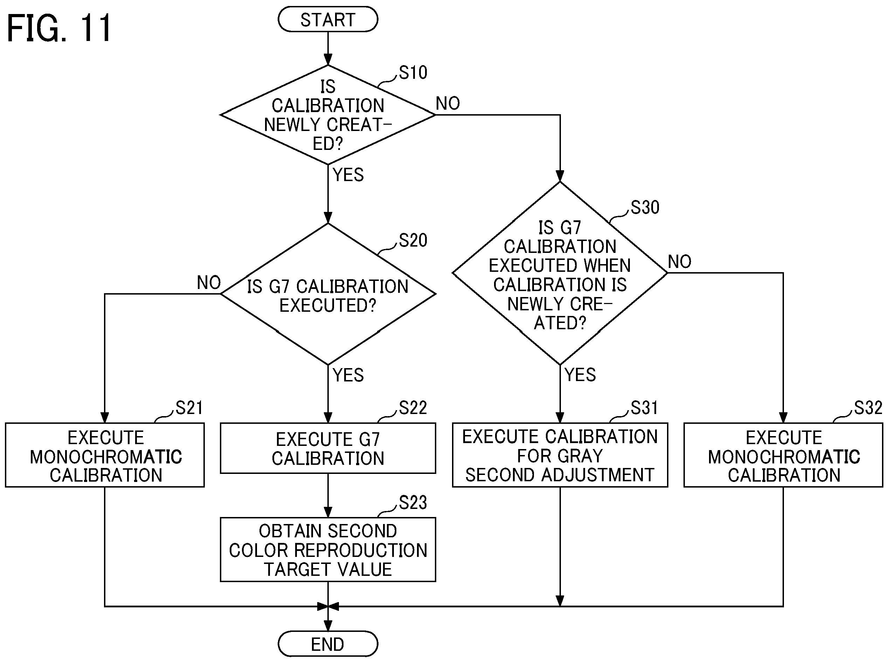

FIG. 11 is a flowchart of the processing executed by the image forming system 1 according to the embodiments of the present disclosure. In the following description, a case is described in which the first gray adjustment unit 56 of the processing apparatus 14 executes the G7 calibration in accordance with the standard color in the industry. The first color reproduction target is a gray target obtained by Formula (1) defined by the G7.

In step S10, the operator operates the operation apparatus 12 to select whether to perform calibration to newly create a calibration curve (hereinafter, newly create a calibration) or update a calibration. When the operator selects to newly create a calibration, the processing proceeds to step S20, where the operator selects whether to execute the G7 calibration through the operation apparatus 12.

In the case where the operator does not select to execute the G7 calibration ("NO at S20"), the image forming system 1 executes ordinary monochromatic calibration in step S21. Then, the processing for newly creating a calibration ends. In the case where the operator selects to execute the G7 calibration ("YES" at S20), the image forming system 1 executes the G7 calibration in step S22. Then, the processing proceeds to step S23. The processing apparatus 14 obtains the second color reproduction target value that is the calibration target. Then, the processing for newly creating a calibration ends.

On the other hand, in the case where the operator selects to update a calibration ("NO" at S10), the processing proceeds to step S30, where the image forming system 1 determines whether the G7 calibration was executed at the time the calibration was newly created.

In the case where the G7 calibration was executed ("YES" at S30), the processing apparatus 14 executes calibration for the gray second adjustment in step S31. Then, the processing for updating a calibration ends. On the other hand, in the case where the G7 calibration was not executed ("NO" at S30), the processing apparatus 14 executes the ordinary monochromatic calibration in step S32. Then, the processing for updating a calibration ends.

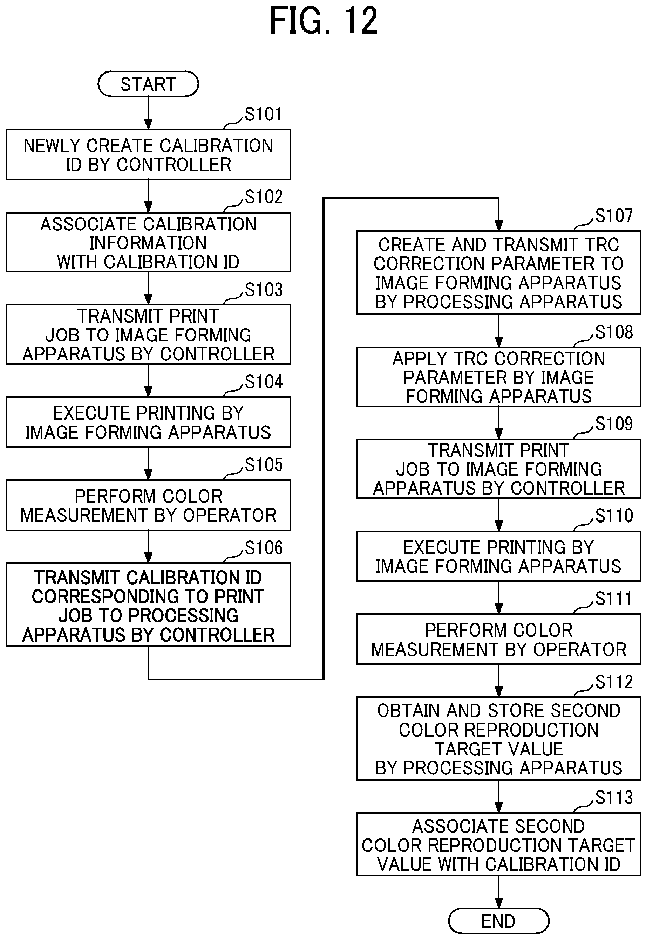

FIG. 12 is a flowchart of details of the processing executed by the image forming system 1 at the time a calibration is newly created, according to the embodiments of the present disclosure. In FIG. 12, the processing in the case where a determination of YES is made in step S20 for executing the G7 calibration in the processing for newly creating a calibration in FIG. 11 is illustrated.

In the case where newly creating a calibration is selected in step S10 of FIG. 11, the controller 10 newly creates a calibration ID in step S101 of FIG. 12. In step S102, the controller 10 associates calibration information such as a print sheet, a basis weight, a halftone, a type of calibration (mixed color), and a calibration execution time with the calibration ID. In step S103, the controller 10 creates a print job used for the G7 calibration and transmits the print job to the image forming apparatus 16.

In step S104, the image forming apparatus 16 receives the print job from the controller 10 and executes printing based on the print job. In step S105, the operator performs color measurement on the printed chart using the colorimeter 18. The colorimeter 18 transmits the colorimetric data to the processing apparatus 14.

In step S106, the controller 10 also transmits the calibration ID corresponding to the print job used for the G7 calibration to the processing apparatus 14. In step S107, the processing apparatus 14 generates a TRC correction parameter for the G7 calibration based on the received colorimetric data, and transmits the TRC correction parameter to the image forming apparatus 16 together with the calibration ID. In step S108, the image forming apparatus 16 applies the TRC correction parameter corresponding to the received calibration ID to the TRC. The G7 calibration is completed through the processing up to step S108.

In step S109, the controller 10 creates a print job that includes an image on a chart used for obtaining a calibration target, and transmits the print job to the image forming apparatus 16. In step S110, the image forming apparatus 16 receives the print job from the controller 10 and executes printing based on the print job.

In step S111, the operator performs color measurement on the printed chart using the colorimeter 18. The colorimeter 18 transmits the colorimetric data to the processing apparatus 14. In step S112, the processing apparatus 14 obtains a second color reproduction target value based on the received colorimetric data, and stores the second color reproduction target value in the storage unit 54. In step S113, the controller 10 stores the second color reproduction target value in association with the calibration ID.

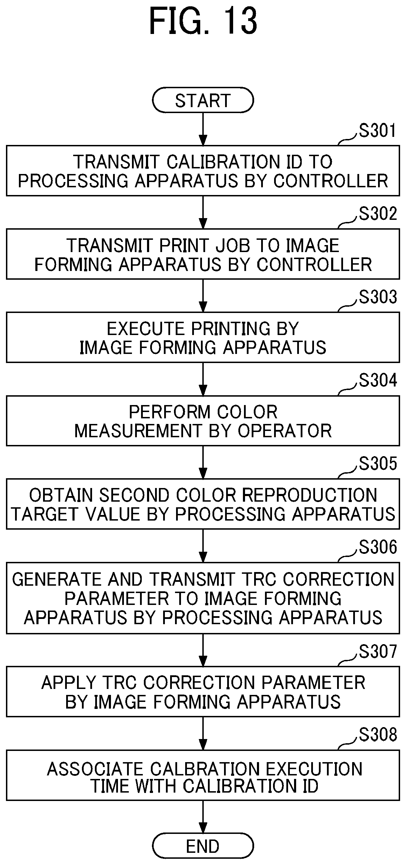

FIG. 13 is a flowchart of details of the processing executed by the image forming system 1 at the time a calibration is updated, according to the embodiments of the present disclosure. In FIG. 13, the processing in the case where the G7 calibration is executed in the processing for newly creating a calibration in FIG. 11 is illustrated.

In step S301, the controller 10 transmits the calibration ID corresponding to the print job used for the G7 calibration to the processing apparatus 14. In step S302, the controller 10 creates a print job that includes an image on a chart used for the gray second adjustment and transmits the print job to the image forming apparatus 16. The image forming apparatus 16 receives the print job from the controller 10 and executes printing based on the print job.

In step S304, the operator performs color measurement on the printed chart using the colorimeter 18. The colorimeter 18 transmits the colorimetric data to the processing apparatus 14. In step S305, the processing apparatus 14 obtains the second color reproduction target value associated with the calibration ID received from the controller 10.

In step S306, the processing apparatus 14 generates a TRC correction parameter based on the received colorimetric data and the second color reproduction target value, and transmits the TRC correction parameter to the image forming apparatus 16. In step S307, the image forming apparatus 16 applies the received TRC correction parameter to the TRC. In step S308, the controller 10 updates the calibration execution time and associates the calibration execution time with the calibration ID.

The above description is merely an example. For example, the image forming system 1 may be configured to use an in-line colorimeter that automatically performs color measurement, or to use a combination of an in-line scanner and a scanner calibration function. Further, the G7 calibration is an example, and the present disclosure is not limited to the G7 calibration.

Second Embodiment

In the present embodiment, a case is described in which the operator, on a user interface (UI), selects whether to newly create a calibration or update a calibration and sets the second color reproduction target value as a gray target at the time a calibration is newly created.

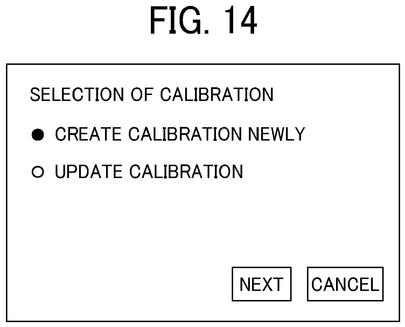

FIGS. 14 to 17F are diagrams each illustrating the UI according to the embodiments of the present disclosure. FIG. 14 corresponds to a screen to be displayed in step S10 of FIG. 11. The operator selects whether to newly create a calibration or update a calibration on the screen illustrated in FIG. 14.

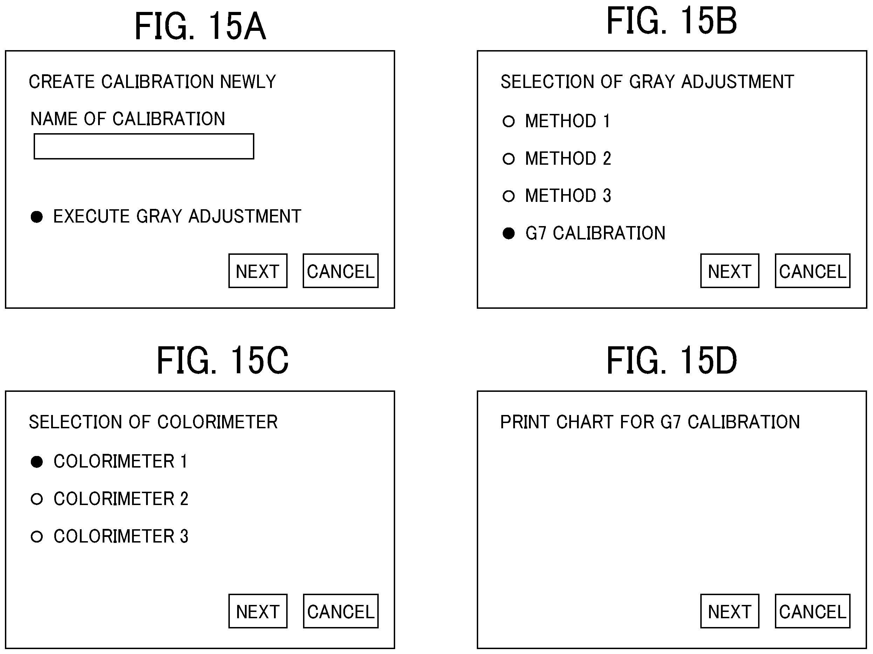

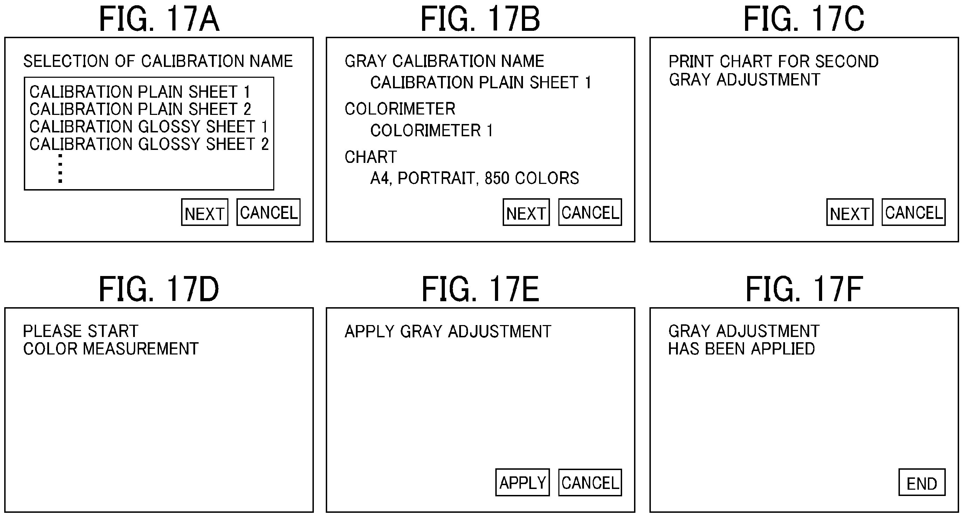

In the case where the operator selects to newly create a calibration, the screen transitions to the screen illustrated in FIG. 15A. In the case where the operator selects to update a calibration, the screen transitions to the screen illustrated in FIG. 17A.

In FIGS. 15A to 16D, the UIs displayed at the time a calibration is newly created are illustrated, which are examples of the UIs to be displayed in steps S22 and S23 of FIG. 11. In FIG. 15A, an example of a screen on which, in the case where a calibration is newly created, the operator inputs the name of the calibration and selects whether to execute gray adjustment using a check box, is illustrated.

In FIG. 15B, an example of a screen on which the operator selects the type of gray adjustment is illustrated. In the first embodiment, the G7 calibration is described as an example of a calibration method. However, in the case where other gray adjustment methods are also selectable, the example of the screen illustrated in FIG. 15B is presented. In FIG. 15B, a case in which the G7 calibration is selected is illustrated.

In FIG. 15C, an example of a screen on which the operator selects the colorimeter 18 is illustrated. When the colorimeter 18 is determined, a chart to be printed is also determined. Accordingly, in FIG. 15D, an example of a screen that indicates to the operator that the chart is to be printed is illustrated. In FIG. 15D, a case in which a chart used for the G7 calibration is to be printed is illustrated.

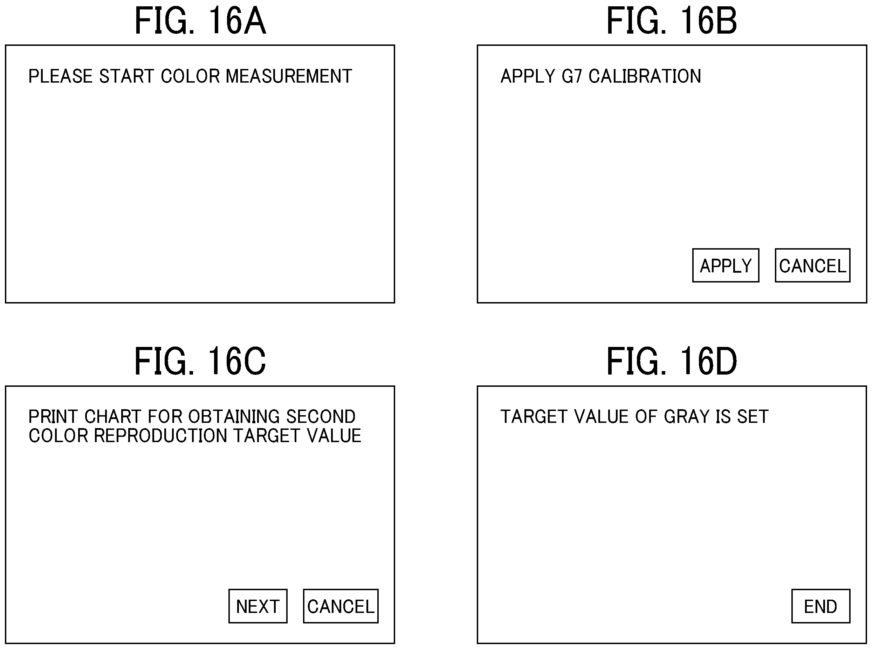

In FIG. 16A, an example of a screen for instructing the operator to perform color measurement on the printed chart is illustrated. In response to the instruction, the operator manually performs color measurement. After the color measurement is performed, the processing apparatus 14 creates a TRC correction parameter. In FIG. 16B, an example of a screen indicating that the created TRC correction parameter is applied is illustrated.

When the operator selects an acceptance ("Apply") on the screen illustrated in FIG. 16B, the screen transitions to the screen illustrated in FIG. 16C. In FIG. 16C, an example of a screen indicating that a chart used for obtaining a second color reproduction target value is to be printed is illustrated. Thereafter, the screen transitions to the screen illustrated in FIG. 16A, which indicates an instruction to the operator to perform color measurement on the printed chart used for obtaining the second color reproduction target value. In response to the instruction, the operator manually performs color measurement. In FIG. 16D, an example of a screen displayed after the execution of the color measurement is illustrated. In FIG. 16D, a case in which the screen indicating that the gray reproduction target value is set is illustrated.

In FIGS. 17A to 17F, the UIs at the time a calibration is updated are illustrated, which are examples of the UIs to be displayed in steps S30 and S31 of FIG. 11.

In FIG. 17A, an example of a screen on which the operator selects the name of a calibration to be targeted from a list of the names of the calibrations when a calibration is updated is illustrated. The controller 10 identifies the colorimeter 18 and the colorimetric chart to be used from the calibration ID file associated with the name of the calibration selected from the list of the names of the calibrations. In FIG. 17B, an example of a screen on which the result identified by the controller 10 is illustrated.

In FIG. 17C, an example of a screen indicating that a chart used for the gray second adjustment is to be printed is illustrated. Thereafter, the screen transitions to the screen illustrated in FIG. 17D, which indicates an instruction to the operator to perform color measurement on the printed chart used for the gray second adjustment. In response to the instruction, the operator manually performs color measurement. After the execution of the color measurement, the processing apparatus 14 creates a TRC correction parameter. In FIG. 17E, an example of a screen indicating that the created TRC correction parameter is to be applied is illustrated. When the operator selects an acceptance ("Apply") on the screen illustrated in FIG. 17E, the screen transitions to the screen illustrated in FIG. 17F. In FIG. 17F, an example of a screen indicating that the gray adjustment has been applied is illustrated.

According to the present embodiments, a gray calibration method that involves complicated operations of the industry standard is easily operated. In the present embodiment, the G7 calibration is described as an example of a calibration method as the industry standard, but the present disclosure is not limited to the G7 calibration.

The image forming system 1 according to the present embodiments prints a chart to obtain a target gray immediately after the first gray adjustment unit 56 executes calibration. The second gray adjustment unit 58 executes calibration to correct the relative color shift from the target gray.

The image forming system 1 prints a chart formed of color mixed gray patches used at the time a calibration is newly created, and performs color measurement on the printed chart to obtain a target Lab value. The image forming system 1 corrects the color shift from the target Lab value at the time the calibration is updated. In other words, the image forming system 1 performs relative correction at the time the calibration is updated, and returns the calibration to the state of the mixed-color gray at the time the calibration is newly created. Thus, using the image forming system 1 according to the present embodiments, the only complicated operation is the G7 calibration at the time a calibration is newly created.

As a result, according to the present embodiments, both high quality and convenience of calibration are achieved.

While some embodiments of the present disclosure have been described, the present disclosure is not limited to such embodiments and may be modified and substituted in various ways without departing from the spirit of the present disclosure.

For example, the image forming system 1 according to the present embodiments may have a configuration in which some of the operation apparatus 12, the processing apparatus 14, the image forming apparatus 16, and the colorimeter 18 are integrated. The image forming apparatus 16 may have the functions of the operation apparatus 12, the processing apparatus 14, and the colorimeter 18.

Each of the functions of the embodiments described above may be implemented by one or more processing circuits or circuitry. The functionality of the elements disclosed herein may be implemented using circuitry or processing circuitry which includes general-purpose processors, special-purpose processors, integrated circuits, application-specific integrated circuits (ASICs), digital signal processors (DSPs), field-programmable gate arrays (FPGAs), conventional circuitry and/or combinations thereof which are configured or programmed to perform the disclosed functionality.

Aspects of the present disclosure are, for example, as follows.

Aspect 1

A processing apparatus includes:

a first gray adjustment unit that sets a value on a device-independent color space as a first color reproduction target value of mixed color;

a second color reproduction target value obtaining unit that obtains, as a calibration target, a second color reproduction target value of mixed color in a printing environment where the first color reproduction target value is set; and

a second gray adjustment unit that adjusts a correction parameter to be applied in the printing environment in a case that a calibration is updated, so as to correct a color difference between the first color reproduction target value and the second color reproduction target value using the correction parameter.

Aspect 2

In the processing apparatus according to Aspect 1, the second color reproduction target value obtaining unit obtains the second color reproduction target value in the printing environment immediately after the calibration is newly created using the first color reproduction target value.

Aspect 3

In the processing apparatus according to Aspect 1 or 2, device values of print patches used by the second color reproduction target value obtaining unit and the second gray adjustment unit are different from a device value of a print patch used by the first gray adjustment unit.

Aspect 4

In the processing apparatus according to any one of Aspects 1 to 3, the printing environment where the first color reproduction target value is set is based on G7 calibration.

Aspect 5

A color management method performed by a processing apparatus includes:

setting a value on a device-independent color space as a first color reproduction target value of mixed color;

obtaining, as a calibration target, a second color reproduction target value of mixed color in a printing environment where the first color reproduction target value is set; and

adjusting a correction parameter to be applied in the printing environment in a case that a calibration is updated, so as to correct a color difference between the first color reproduction target value and the second color reproduction target value using the correction parameter.

Aspect 6

A carrier medium carries computer-readable code for controlling a computer system of a processing apparatus to carry out a method including:

setting a value on a device-independent color space as a first color reproduction target value of mixed color;

obtaining, as a calibration target, a second color reproduction target value of mixed color in a printing environment where the first color reproduction target value is set; and

adjusting a correction parameter to be applied in the printing environment in a case that a calibration is updated, so as to correct a color difference between the first color reproduction target value and the second color reproduction target value using the correction parameter.

Aspect 7

An image forming apparatus for executing printing includes:

a first gray adjustment unit that sets a value on a device-independent color space as a first color reproduction target value of mixed color;

a second color reproduction target value obtaining unit that obtains, as a calibration target, a second color reproduction target value of mixed color in a printing environment where the first color reproduction target value is set; and

a second gray adjustment unit that adjusts a correction parameter to be applied in the printing environment in a case that a calibration is updated, so as to correct a color difference between the first color reproduction target value and the second color reproduction target value using the correction parameter.

Aspect 8

An image forming system for executing printing includes:

a first gray adjustment unit that sets a value on a device-independent color space as a first color reproduction target value of mixed color;

a second color reproduction target value obtaining unit that obtains, as a calibration target, a second color reproduction target value of mixed color in a printing environment where the first color reproduction target value is set; and

a second gray adjustment unit that adjusts a correction parameter to be applied in the printing environment in a case that a calibration is updated, so as to correct a color difference between the first color reproduction target value and the second color reproduction target value using the correction parameter.

Aspect 9

The image forming system according to Aspect 8 further includes an operation apparatus that displays a user interface and receives an operation from an operator through the user interface, receives a setting of the second color reproduction target value of mixed color as the calibration target from the operator in a case that the calibration is newly created, and receives a setting for adjusting a correction parameter to be applied in the printing environment for correcting the color difference in a case that the calibration is updated.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

In one aspect, an image forming apparatus includes a first gray adjustment unit to set a value on a device-independent color space as a first color reproduction target value of mixed color, a second color reproduction target value obtaining unit to obtain, as a calibration target, a second color reproduction target value of mixed color in a printing environment where the first color reproduction target value is set, and a second gray adjustment unit to adjust a correction parameter to be applied in the printing environment in a case that a calibration is updated, so as to correct a color difference between the first color reproduction target value and the second color reproduction target value using the correction parameter.

**Claims**

1. A processing apparatus (14) comprising:

   a first gray adjustment unit (56) configured to set a value on a device-independent color space as a first color reproduction target value of mixed color;
   a second color reproduction target value obtaining unit (52) configured to obtain, as a calibration target, a second color reproduction target value of mixed color in a printing environment where the first color reproduction target value is set; and
   a second gray adjustment unit (58) configured to adjust a correction parameter to be applied in the printing environment in a case that a calibration is updated, so as to correct a color difference between the first color reproduction target value and the second color reproduction target value using the correction parameter.

2. The processing apparatus (14) according to claim 1, wherein the second color reproduction target value obtaining unit (52) is configured to obtain the second color reproduction target value in the printing environment immediately after the calibration is newly created using the first color reproduction target value.

3. The processing apparatus (14) according to claim 1 or 2, wherein device values of print patches used by the second color reproduction target value obtaining unit (52) and the second gray adjustment unit (58) are different from a device value of a print patch used by the first gray adjustment unit (56).

4. The processing apparatus (14) according to claim 1, 2, or 3, wherein the printing environment where the first color reproduction target value is set is based on G7 calibration.

5. A color management method performed by a processing apparatus (14), the method comprising:

   setting a value on a device-independent color space as a first color reproduction target value of mixed color;
   obtaining (S23), as a calibration target, a second color reproduction target value of mixed color in a printing environment where the first color reproduction target value is set; and
   adjusting (S306) a correction parameter to be applied in the printing environment in a case that a calibration is updated, so as to correct a color difference between the first color reproduction target value and the second color reproduction target value using the correction parameter.

6. A carrier medium carrying computer-readable code for controlling a computer system of a processing apparatus (14) to carry out a method, the method comprising:

   setting a value on a device-independent color space as a first color reproduction target value of mixed color;
   obtaining (S23), as a calibration target, a second color reproduction target value of mixed color in a printing environment where the first color reproduction target value is set; and
   adjusting (S306) a correction parameter to be applied in the printing environment in a case that a calibration is updated, so as to correct a color difference between the first color reproduction target value and the second color reproduction target value using the correction parameter.

7. An image forming system (1) comprising:

   the processing apparatus of any one of claims 1 to 4; and
   an image forming apparatus (16) configured to receive the correction parameter, and execute printing based on a print job to which the correction parameter is applied.

8. The image forming system (1) according to claim 7, further comprising:
   an operation apparatus (12) configured to:

   display a user interface and receive an operation from a user through the user interface;
   receive a setting of the second color reproduction target value of mixed color as the calibration target from the operator in a case that the calibration is newly created; and

receive a setting for adjusting a correction parameter to be applied in the printing environment for correcting the color difference in a case that the calibration is updated.

# FIG. 1

EP 4 468 693 A1

1

CONTROLLER /10

OPERATION APPARATUS /12

PROCESSING APPARATUS /14

/20

IMAGE FORMING APPARATUS /16

COLORIMETER /18

# FIG. 2

EP 4 468 693 A1

| | | | |
|---|---|---|---|
| CPU 101 | RAM 102 | ROM 103 | NETWORK I/F 104 |

| | | | |
|---|---|---|---|
| PANEL I/F 111 | SCANNER I/F 112 | ENGINE I/F 113 | EXTERNAL I/F 114 |

| | | | |
|---|---|---|---|
| OPERATION PANEL 121 | SCANNER ENGINE 122 | PLOTTER ENGINE 123 | STORAGE 124 |

16

20

# FIG. 3

EP 4 468 693 A1

# FIG. 4

CONTROLLER · 10

RECEPTION UNIT · 30

TRANSMISSION UNIT · 32

CALIBRATION ID MANAGEMENT UNIT · 34

STORAGE UNIT · 36

EP 4 468 693 A1

# FIG. 5

EP 4 468 693 A1

IMAGE FORMING APPARATUS ⟋16

RECEPTION UNIT ⟋40

TRC CORRECTION APPLYING UNIT ⟋42

FIG. 6

PROCESSING APPARATUS /14

RECEPTION UNIT /50 → SECOND COLOR REPRODUCTION TARGET VALUE OBTAINING UNIT /52

STORAGE UNIT /54

FIRST GRAY ADJUSTMENT UNIT /56

TRC CORRECTION PARAMETER CALCULATION UNIT

NPDC GENERATION UNIT

SECOND GRAY ADJUSTMENT UNIT /58

TRC CORRECTION PARAMETER CALCULATION UNIT

TRANSMISSION UNIT /60

EP 4 468 693 A1

FIG. 7

FIG. 8

FIG. 9

# FIG. 10

FIG. 11

START

S10 IS CALIBRATION NEWLY CREAT-ED?

NO →

YES ↓

S20 IS G7 CALIBRATION EXECUTED?

NO →

YES ↓

S30 IS G7 CALIBRATION EXECUTED WHEN CALIBRATION IS NEWLY CRE-ATED?

NO →

YES ↓

S21 EXECUTE MONOCHROMATIC CALIBRATION

S22 EXECUTE G7 CALIBRATION

S23 OBTAIN SECOND COLOR REPRODUCTION TARGET VALUE

S31 EXECUTE CALIBRATION FOR GRAY SECOND ADJUSTMENT

S32 EXECUTE MONOCHROMATIC CALIBRATION

END

# FIG. 12

START

S101

NEWLY CREATE CALIBRATION
ID BY CONTROLLER

S102

ASSOCIATE CALIBRATION
INFORMATION
WITH CALIBRATION ID

S103

TRANSMIT PRINT
JOB TO IMAGE FORMING
APPARATUS BY CONTROLLER

S104

EXECUTE PRINTING BY
IMAGE FORMING APPARATUS

S105

PERFORM COLOR
MEASUREMENT BY OPERATOR

S106

TRANSMIT CALIBRATION ID
CORRESPONDING TO PRINT
JOB TO PROCESSING
APPARATUS BY CONTROLLER

S107

CREATE AND TRANSMIT TRC
CORRECTION PARAMETER TO
IMAGE FORMING APPARATUS
BY PROCESSING APPARATUS

S108

APPLY TRC CORRECTION
PARAMETER BY IMAGE
FORMING APPARATUS

S109

TRANSMIT PRINT
JOB TO IMAGE FORMING
APPARATUS BY CONTROLLER

S110

EXECUTE PRINTING BY
IMAGE FORMING APPARATUS

S111

PERFORM COLOR
MEASUREMENT BY OPERATOR

S112

OBTAIN AND STORE SECOND
COLOR REPRODUCTION
TARGET VALUE
BY PROCESSING APPARATUS

S113

ASSOCIATE SECOND
COLOR REPRODUCTION TARGET
VALUE WITH CALIBRATION ID

END

# FIG. 13

```
                    ┌─────────────┐
                    │    START    │
                    └─────────────┘
                           │
                           ▼                    S301
        ┌──────────────────────────────────────┐
        │     TRANSMIT CALIBRATION ID TO        │
        │  PROCESSING APPARATUS BY CONTROLLER   │
        └──────────────────────────────────────┘
                           │
                           ▼                    S302
        ┌──────────────────────────────────────┐
        │       TRANSMIT PRINT JOB TO IMAGE     │
        │   FORMING APPARATUS BY CONTROLLER     │
        └──────────────────────────────────────┘
                           │
                           ▼                    S303
        ┌──────────────────────────────────────┐
        │         EXECUTE PRINTING BY           │
        │       IMAGE FORMING APPARATUS         │
        └──────────────────────────────────────┘
                           │
                           ▼                    S304
        ┌──────────────────────────────────────┐
        │          PERFORM COLOR                │
        │      MEASUREMENT BY OPERATOR          │
        └──────────────────────────────────────┘
                           │
                           ▼                    S305
        ┌──────────────────────────────────────┐
        │  OBTAIN SECOND COLOR REPRODUCTION     │
        │ TARGET VALUE BY PROCESSING APPARATUS  │
        └──────────────────────────────────────┘
                           │
                           ▼                    S306
        ┌──────────────────────────────────────┐
        │ GENERATE AND TRANSMIT TRC CORRECTION  │
        │     PARAMETER TO IMAGE FORMING        │
        │  APPARATUS BY PROCESSING APPARATUS    │
        └──────────────────────────────────────┘
                           │
                           ▼                    S307
        ┌──────────────────────────────────────┐
        │   APPLY TRC CORRECTION PARAMETER      │
        │     BY IMAGE FORMING APPARATUS        │
        └──────────────────────────────────────┘
                           │
                           ▼                    S308
        ┌──────────────────────────────────────┐
        │   ASSOCIATE CALBRATION EXECUTION      │
        │     TIME WITH CALIBRATION ID          │
        └──────────────────────────────────────┘
                           │
                           ▼
                    ┌─────────────┐
                    │     END     │
                    └─────────────┘
```

# FIG. 14

SELECTION OF CALIBRATION

● CREATE CALIBRATION NEWLY

○ UPDATE CALIBRATION

| NEXT | | CANCEL |

## FIG. 15A

CREATE CALIBRATION NEWLY

NAME OF CALIBRATION

[                    ]

● EXECUTE GRAY ADJUSTMENT

[NEXT] [CANCEL]

## FIG. 15B

SELECTION OF GRAY ADJUSTMENT

○ METHOD 1

○ METHOD 2

○ METHOD 3

● G7 CALIBRATION

[NEXT] [CANCEL]

## FIG. 15C

SELECTION OF COLORIMETER

● COLORIMETER 1

○ COLORIMETER 2

○ COLORIMETER 3

[NEXT] [CANCEL]

## FIG. 15D

PRINT CHART FOR G7 CALIBRATION

[NEXT] [CANCEL]

EP 4 468 693 A1

## FIG. 16A

PLEASE START COLOR MEASUREMENT

## FIG. 16B

APPLY G7 CALIBRATION

APPLY  CANCEL

## FIG. 16C

PRINT CHART FOR OBTAINING SECOND
COLOR REPRODUCTION TARGET VALUE

NEXT  CANCEL

## FIG. 16D

TARGET VALUE OF GRAY IS SET

END

## FIG. 17A

SELECTION OF CALIBRATION NAME

CALIBRATION PLAIN SHEET 1
CALIBRATION PLAIN SHEET 2
CALIBRATION GLOSSY SHEET 1
CALIBRATION GLOSSY SHEET 2
⋮

[NEXT] [CANCEL]

## FIG. 17B

GRAY CALIBRATION NAME
   CALIBRATION PLAIN SHEET 1

COLORIMETER
   COLORIMETER 1

CHART
   A4, PORTRAIT, 850 COLORS

[NEXT] [CANCEL]

## FIG. 17C

PRINT CHART FOR SECOND
GRAY ADJUSTMENT

[NEXT] [CANCEL]

## FIG. 17D

PLEASE START
COLOR MEASUREMENT

## FIG. 17E

APPLY GRAY ADJUSTMENT

[APPLY] [CANCEL]

## FIG. 17F

GRAY ADJUSTMENT
HAS BEEN APPLIED

[END]

EP 4 468 693 A1

# FIG. 18

# FIG. 19
## BACKGROUND ART

FIRST COLORI-METRIC VALUE

LUT DATA

EP 4 468 693 A1

# FIG. 20
## BACKGROUND ART

232

OUTPUT / INPUT

214
LUT DATA

233
PREDICTED VALUE

230

COMPARISON BETWEEN SECOND COLORIMETRIC VALUE AND PREDICTED VALUE
|SECOND COLORIMETRIC VALUE − PREDICTED VALUE| = COLOR DIFFERENCE ΔE

DETERMINATION OF TONE CURVE BASED ON EVALUATION VALUE (COLOR DIFFERENCE ΔE)

SMALLEST COLOR DIFFERENCE ΔE

234
OUTPUT / INPUT

INPUT AND OUTPUT INVERSION

OUTPUT / INPUT

235

EP 4 468 693 A1

Europäisches
Patentamt

European
Patent Office

Office européen
des brevets

# EUROPEAN SEARCH REPORT

Application Number

EP 24 17 5618

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/107291 A1 (KUEHN MARIO [DE]) 2 May 2013 (2013-05-02) * paragraphs [0013] - [0102] * | 1-8 | INV. H04N1/60 |
| X | US 2016/252862 A1 (AMIT GAL [IL] ET AL) 1 September 2016 (2016-09-01) * paragraphs [0002] - [0031] * | 1-8 | |
| A | Xiaoying Rong ET AL: "G7 Method for Indigo Press Calibration and Proofing G7 Method for Indigo Press Calibration and Proofing", , 1 January 2008 (2008-01-01), XP055636393, Retrieved from the Internet: URL:https://www.researchgate.net/profile/Xiaoying_Rong/publication/48909446_G7_Method_for_Indigo_Press_Calibration_and_Proofing/links/00b49529f82845eb91000000/G7-Method-for-Indigo-Press-Calibration-and-Proofing.pdf [retrieved on 2019-10-28] * the whole document * | 1-8 | |

TECHNICAL FIELDS SEARCHED (IPC)

H04N

The present search report has been drawn up for all claims

| Place of search | Date of completion of the search | Examiner |
|---|---|---|
| The Hague | 20 September 2024 | Hardell, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 5618

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2024

| Patent document cited in search report | | Publication date | Patent family member(s) | | Publication date |
|---|---|---|---|---|---|
| US 2013107291 | A1 | 02-05-2013 | BR | 112014010321 A2 | 02-05-2017 |
| | | | CN | 104040520 A | 10-09-2014 |
| | | | EP | 2774042 A1 | 10-09-2014 |
| | | | US | 2013107291 A1 | 02-05-2013 |
| | | | WO | 2013066720 A1 | 10-05-2013 |
| US 2016252862 | A1 | 01-09-2016 | CN | 103380402 A | 30-10-2013 |
| | | | EP | 2659313 A1 | 06-11-2013 |
| | | | US | 2013336666 A1 | 19-12-2013 |
| | | | US | 2016252862 A1 | 01-09-2016 |
| | | | WO | 2012118479 A1 | 07-09-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5754462 B

- JP 2021150803 A